Europäisches Patentamt

European Patent Office

Office européen des brevets

(19)

(11) EP 0 588 038 B1

(12) EUROPÄISCHE PATENTSCHRIFT

(45) Veröffentlichungstag und Bekanntmachung des Hinweises auf die Patenterteilung:
18.09.1996 Patentblatt 1996/38

(51) Int Cl.$^6$: **C23C 18/14**, C04B 41/50

(21) Anmeldenummer: 93112223.8

(22) Anmeldetag: 30.07.1993

(54) **Verfahren zur Herstellung von oxidischen Schutzschichten**

Process for depositing a protective oxide coating

Procédé de dépôt d'une couche d'oxyde protectrice

(84) Benannte Vertragsstaaten:
CH DE FR GB IT LI NL

(30) Priorität: 09.09.1992 DE 4230149

(43) Veröffentlichungstag der Anmeldung:
23.03.1994 Patentblatt 1994/12

(73) Patentinhaber: Heraeus Noblelight GmbH
D-63450 Hanau (DE)

(72) Erfinder:
• Kogelschatz, Ulrich, Dr.
CH-5212 Hausen (CH)
• Stutz, Stefan
CH-5242 Fislisbach (CH)
• von Arx, Christoph
CH-4600 Olten (CH)

(56) Entgegenhaltungen:
EP-A- 0 126 803      EP-A- 0 484 808

• PATENT ABSTRACTS OF JAPAN vol. 10, no. 56 (C-331)(2113) 6. März 1986 & JP-A-60 197 879 (SHIN NIPPON SEITETSU K.K.) 7. Oktober 1985
• TRADOWSKY, K., "Laser: Grundlagen, Technik, Anwendung - 4. Auflage", 1979, VOGEL, Würzburg, DE, S. 23 - 25

**Beschreibung**

**TECHNISCHES GEBIET**

Die Erfindung bezieht sich auf ein Verfahren zur Herstellung von Schutzschichten auf einem Substrat durch photooxidative Umwandlung einer auf dem Substrat aufgebrachten Ausgangssubstanz mit inkohärentem UV-Licht in einer sauerstoffhaltigen Atmosphäre unter photolytischer Abspaltung von Sauerstoffatomen aus Molekülen der Atmosphäre.

**TECHNOLOGISCHER HINTERGRUND UND STAND DER TECHNIK**

Oxidische Schutzschichten werden heute in vielen technischen Gebieten als Korrosionsschutzmittel, zu Isolationszwecken, zur Erhöhung der Kratzfestigkeit und/oder zur Herabsetzung des Abriebs verwendet.

Es ist ein Verfahren zur Herstellung von quarzhaltigen Schichten durch photooxidative Umwandlung von Siliziumverbindungen mit UV-Licht bekannt (M. W. Horn, S. W. Pang und M. Rothschild: Plasma-deposited organosilicon thin films as dry resists for deep ultraviolet lithography, J. Vac. Sci. Technol. B. 8, 6 (1990), pp. 1493 - 1496), bei welchem dünne Schichten aus verschiedenen organischen Siliziumverbindungen durch UV-Bestrahlung mit einem Argonfluorid-Laser mit einer Wellenlänge von 193 nm mit Luftsauerstoff zu Quarz (SiO$_2$) umgewandelt werden. Nachteilig ist bei diesem Verfahren, daß - systembedingt - das zu bestrahlende Substrat während des Laserpulses kurzzeitig sehr hohen Temperaturen ausgesetzt wird.

Aus der Literatur sind ferner Verfahren bekannt, Lösungsmittelfilme aus organischen Aluminiumverbindungen in einem Ofen unter Sauerstoffeinfluß in Al$_2$O$_3$ umzusetzen (J. Gobrecht, M. Rossinelli: "Al$_2$O$_3$ spin-on glass as highly selective mask for reactive ion etching" in "Proceeding of the Fifth Symposium on Plasma Processing" p. 235 - 244, edited by G. S. Mathad, G. C. Schwartz and G. Smolinsky (The Electrochemical Society, Proceedings Volume 85-1) oder US-Patent 4,040,083. Dazu sind Temperaturen von 350 bis 700 °C erforderlich. Damit wird die Auswahl der so zu behandelnden Substrate erheblich eingeschränkt und die Mehrzahl der Kunststoffe ausgeschlossen.

Ein Verfahren gemäß der angegebenen Gattung ist aus der EP-A 0 126 803 bekannt. Darin wird die Herstellung einer SiO$_2$-Schicht auf einem Substrat beschrieben. Hierzu werden sauerstoffhaltige Siliziumverbindungen in einer sauerstoffhaltigen Atmosphäre entweder mit einem gepulsten Argonfluorid-Excimerlaser oder mit einer Niederdruck-Quecksilberdampf-Entladungslampe mit Strahlung von Wellenlängen < 200 nm beaufschlagt, und dabei unter Bildung von SiO$_2$ photochemisch oxidiert. Bei dem bekannten Verfahren werden als geeignete Ausgangsverbindungen für die Beschichtung SiO oder Si$_2$O$_3$ vorgeschlagen. Mit diesen Ausgangsverbindungen gelingt es mit dem bekannten Verfahren, eine dichte SiO$_2$-Schicht unter Verwendung einer Quecksilber-Dampflampe herzustellen. Es wird jedoch erläutert, daß mittels eines Lasers aufgrund dessen höherer Energiedichte die Erzeugung der Beschichtung wesentlich effektiver verläuft.

Ein Verfahren zur Herstellung metallischer Schichten auf einem Substrat ist aus der EP-A 0 484 808 bekannt. Hierzu wird mittels einer Düse eine metallorganische Verbindung auf der Oberfläche des Substrates aufgetragen und anschließend unter UV-Licht einer definierten Wellenlänge zersetzt und anschließend der so erzeugte metallische Film stromlos chemisch oder galvanisch verstärkt.

Der Erfindung liegt somit die Aufgabe zugrunde, ein Verfahren anzugeben, bei dem Oberflächen aus nahezu beliebigem Material mit oxidischen Schutzschichten ohne wesentliche Temperaturbeaufschlagung versehen werden können.

Diese Aufgabe wird ausgehend von dem eingangs genannten gattungsgemäßen Verfahren erfindungsgemäß dadurch gelöst, daß die Photooxidation der Ausgangssubstanz auf dem Substrat mit einer inkohärenten Strahlung eines Edelgas- oder Edelgas-Halogenid-Excimerstrahlers mit einer Wellenlänge von 172 nm oder 222 nm durchgeführt wird und daß als Ausgangssubstanz

- zur Herstellung von Aluminiumoxid-Schutzschichten eine organische Aluminiumverbindung,

- zur Herstellung von Lanthanoxid-Schutzschichten eine organische Lanthanverbindung,

- zur Herstellung von Titanoxid-Schutzschichten eine organische Titanverbindung,

- zur Herstellung von Yttriumoxid-Schutzschichten eine organische Yttriumverbindung,

- zur Herstellung von Hafniumoxid-Schutzschichten eine organische Hafniumverbindung,

- zur Herstellung von Zirkonoxid-Schutzschichten ZrOCl$_2$ oder eine organische Zirkonverbindung,

- zur Herstellung von Schutzschichten mit quarzähnlicher Oberflächenbeschaffenheit polymerisierte Organosilikone, zyklische Polysiloxane, Chloro-Methoxysiloxane, Tetramethylorthosilicat oder Tetraethylorthosilat und

- zur Herstellung von quarzähnlichen Schutzschichten eine UV-härtende siliziumhaltige Verbindung, vorzugsweise ein Epoxisilikon, verwendet wird, das vor der Photooxidation mittels einem UV-Strahler, vorzugsweise UV-Excimerstrahler, größerer Wellenlänge vernetzt wird.

## KURZE DARSTELLUNG DER ERFINDUNG

Der Erfindung liegt dabei die Erkenntnis zugrunde, daß die energiereiche Excimerstrahlung zur Abspaltung eines äußerst reaktionsfreudigen Sauerstoffatoms im angeregten Singlett-Zustand O ($^1$D) führt:

$$O_2 + h\nu\ (172\ nm)\ \text{--}\ O\ (^3P) + O\ (^1D) \qquad (1a)$$

$$O_3 + h\nu\ (172\ nm,\ 222\ nm)\ \text{--}\ O^2 + O\ (^1D) \qquad (1b)$$

$$N_2O + h\nu\ (172\ nm,\ 222\ nm)\ \text{--}\ N2 + O\ (^1D) \qquad (1c)$$

$$NO_2 + h\nu\ (172\ nm,\ 222\ nm)\ \text{--}\ NO + O\ (^1D) \qquad (1d)$$

Zur Herstellung von quarzähnlichen Schutzschichten wird als Ausgangssubstanz eine siliziumhaltige Verbindung verwendet, die auf das Substrat aufgebracht und dort mit einer inkohärenten Strahlung eines Xenon-Excimerstrahlers (6) mit einer Wellenlänge Lambda = 172 nm in einer sauerstoffhaltigen Atmosphäre bestrahlt wird.

Zur Herstellung von Schutzschichten aus Aluminiumoxid wird als Ausgangssubstanz eine organische Aluminiumverbindung, z.B. ein Aluminiumchelat, verwendet. Hierbei werden Excimer-Strahler der Wellenlänge 172nm (Xenon-Excimere) oder 222 nm (Kryptonchlorid-Excimere) eingesetzt.

Zur Herstellung von Schutzschichten aus Lanthanoxid wird als Ausgangssubstanz eine organische Lanthanverbindung, z.B. Lanthan-2,4-pentandionat, verwendet. Hierbei werden wiederum Excimer-Strahler der Wellenlänge 172nm (Xenon-Excimere) oder 222 nm (Kryptonchlorid-Excimere) eingesetzt.

Analog lassen sich auch oxidischen Schutzschichten aus Titan, Yttrium, Hafnium und Zirkonium herstellen.

Mit den erfindungsgemässen photolytischen Abscheideverfahren ist es auch möglich, temperaturempfindliche Materialien wie Papier, Plastik, Textilgewebe, Kunstfaser-Vliese etc. mit harten Oxidschichten zu überziehen. Neben Anwendungen in der Elektrotechnik, insbesondere Isoliertechnik, wo solche Schutzschichten die Entflammbarkeit erheblich herabsetzen und Resitenz gegen Teilentladungen und Lichtbogeneinwirkungen verbessern, können solche Schichten aufgrund ihrer Oberflächenbeschaffenheit in der Photolithographie und als KorrosionsschutzAnwendung finden. Auch kratzfeste Schichten auf Compact Disks und anderen Datenträgern, auf Brillengläsern, Uhrengläsern und Autoscheiben appliziert werden.

Da die Umwandlung durch Strahlung ausgelöst wird, kann man durch Masken oder Abbildungen lediglich bestimmte Segmente oder Zonen umwandeln, und so Strukturen, Ätzmasken etc. herstellen. Ebenso kann man durch selektive Aufbringung der (in der Regel flüssigen) Ausgangssubstanz, z.B. im Siebdruck oder einem schreibenden Verfahren, und anschliessende flächenhafte UV-Bestrahlung die gleichen Effekte einer segmentoder zonenweisen Oxidbeschichtung erzielen. Auf diese Weise lassen sich auch Passivierungsschichten für Halbleiterbauelemente herstellen.

Die Einrichtung zur Durchführung des erfindungsgemässen Verfahrens umfasst eine Bestrahlungskammer mit mindestens einem UV-Excimerstrahler auf, der auf das Substrat gerichtet ist, einen Gaseinlass und einen Gasauslass, durch welchen ein sauerstoffhaltiges Gas bzw. Gasgemisch in die Bestrahlungskammer einleitbar bzw. aus ihr abführbar ist.

Ausführungsbeispiele der Erfindung sowie die damit erzielbaren Vorteile werden nachfolgend anhand der Zeichnung näher erläutert.

## KURZE BESCHREIBUNG DER ZEICHNUNG

In der Zeichnung sind Ausführungsbeispiele von Einrichtungen zur Beschichtung von Substraten schematisch dargestellt. Dabei zeigt

Fig.1    ein Ausführungsbeispiel einer Einrichtung zur Beschichtung von begrenzten Substraten;

Fig.2    eine Ausführungsform der erfindungsgemässen Einrichtung zur Beschichtung bahnförmiger Substrate.

**WEGE ZUR AUSFÜHRUNG DER ERFINDUNG**

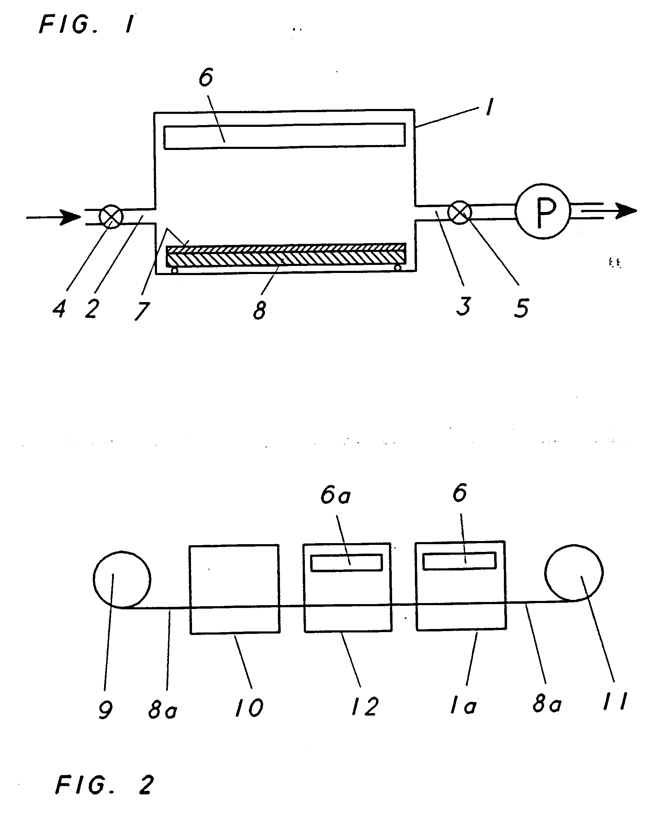

In Fig 1 ist eine Bestrahlungskammer mit der Bezugsziffer 1 bezeichnet. Sie weist einen Gaseinlass 2 und einen Gasauslass 3 auf, die mittels Absperrorganen 4 bzw. 5 verschlossen werden können. Im oberen Teil der Kammer 1 ist ein Xenon-Excimerstrahler (172 nm) oder ein Kryptonchlorid-Excimerstrahler (222 nm) 6 angeordnet. Ihm gegenüber liegt im unteren Teil der Kammer das mit einer Schutzschicht 7 zu beschichtende Substrat 8. Die Kammer ist mit einem sauerstoffhaltigem Gas oder Gasgemisch gefüllt, z.B. Luft, reinem Sauerstoff, $N_2O$, $NO_2$, Ozon, Sauerstoff-Edelgasgemisch. Weil insbesondere in Luft- oder Sauerstoff-Atmosphäre die kurzwellige UV-Strahlung zu stark abgeschwächt wird, ist zum Herabsetzen des Drucks fakultativ eine Saugpumpe P am Auslass 3 vorgesehen.

Aufbau und Wirkungsweise des Excimerstrahlers sind bekannt und beispielsweise in der Firmenschrift der Anmelderin "Neue UV-Strahler für industrielle Anwendungen", Druckschrift CH-E 3.30833.0 D, einem Sonderdruck aus der Firmenzeitschrift "ABB TECHNIK" 3/91, S. 21-28, hinsichtlich Aufbau und Wirkungsweise beschrieben.

Als Substrat kommem, je nach Anwendungsfall, Folien, Papiere, Körper und dergl. zum Einsatz. Das Substrat 8 wird, insbesondere wenn es aus Kunststoff (z.B. Polyäthylen, Polyester,Polypropylen etc.) besteht, in an sich bekannter Weise vorgängig aufgerauht und gereinigt, z.B. durch Koronaentladungen oder UV-Bestrahlung, um die Haftfestigkeit der aufzubringenden Schicht zu erhöhen.

Beispiel 1 - Quarzähnliche Schutzschichten

Die Schicht 7 besteht aus einer siliziumhaltigen Verbindung, welche durch die UV-Strahlung zumindest im oberflächigen Bereich oxidiert wird, so dass sich eine quarzähnliche Oberflächenbeschaffenheit ergibt. Beispiele für solche siliziumhaltige Verbindungen sind Silizium-Copolymere, wie sie unter der Bezeichnung "UV9300 Polymer" des Herstellers General Electric im Handel sind und im Datenblatt "GE SILICONES - UV9300 Easy Release Polymer", undatiert dieses Herstellers beschrieben sind. Je nach Substrat ist dabei die Zugabe eines Katalysators - dort UV9310C Catalyst - von nöten. Andere Beispiele von anderen siliziumhaltigen Verbindungen, die sich für Beschichtungszwecke eignen, sind in der eingangs zitierten Arbeit "Plasma-deposited organosilicon films...", a.a.O Seite 1493, rechte Spalte, aufgeführt: polymerisierte Organofilamente wie HMDS, HM2S, TMS, TMSDMA. Zusätzlich kommen auch zyklische Polysiloxane wie OMCTS (Oktomethylzyklotetrasiloxan), PTCS (Phenyltrichlorosilan), BTCS (Benzyltrichlorosilan), APTS (3-Aminopropyltrimetoxysilan), EDE (N-(2-Aminoethyl-3-aminopropyl)-Trimetoxysilan, Tetramethylorthosilicat (Si$(OCH_3)_4$) oder Tetraethylorthosilicat (Si$(OC_2H_5)_4$ in Betracht.

Die Beschichtung des Substrats 8 erfolgt beispielsweise durch Aufrollen mit einer Schichtdicke von einigen µm. Unmittelbar nach der Beschichtung wird das vorbereitete Substrat während einiger Minuten der Strahlung des Xenon-Excimerstrahlers 6 mit einer Wellenlänge von 172 nm in einer sauerstoffhaltigen Atmospäre ausgesetzt.

Der besondere Vorteil der erfindungsgemässen UV-Oxidation liegt insbesondere darin, dass quarzähnliche, hochfeste Schichten auch auf temperaturempfindlichen Materialien wie z.B. Plastik, Papier etc. aufgebracht werden können. So kann man beispielsweise auf das Substrat 8 eine Schicht aus UV-härtenden Epoxisilicon aufbringen und diese Schicht vorgängig mit einem Excimerstrahler, z.B. einem Kryptonchloridstrahler (Lambda = 222 nm) oder einem Xenonchloridstrahler (Lambda = 308 nm) - beide sind in der zitierten Firmenschrift "Neue UV-Strahler..." ebenfalls beschrieben - vernetzen. Anschliessend wird dann mit einem zweiten Excimerstrahler kürzerer Wellenlänge bestrahlt, welche die gewünschte Oxidation des Siliziums bewirkt. Ein Beispiel für eine derartige Substanz findet sich ebenfalls in einem Abstrakt "Advances in UV-Curable Epoxysilicone Release Technology" der Firma General Electric, undatiert. Dort wird auf ein UV-härtbare, mit funktionellen Epoxigruppen versehene Polymethylsiloxane, die mit Jodoniumsalzen als Photoinitiator gemischt sind, verwiesen.

Neben dem Ausführungsbeispiel nach Fig.1 umfasst die Erfindung eine Reihe von weiteren Abwandlungen und Modifikationen.

Anstelle von plattenförmigen Substraten des Ausführungsbeispiels können selbstverständlich bahnenförmige Substrate im kontinuierlichen Verfahren beschichtet werden. So zeigt Fig.2 in stark vereinfachter Form eine Einrichtung zur Beschichtung bahnförmiger Substrate.

Das bahnförmige Substrat 8a wird von einer Vorratstrommel 9 kommend einer Beschichtungseinrichtung 10 zugeführt, dort mit einer siliziumhaltigen Verbindung beschichtet. Das Substrat 8a gelangt dann in eine Bestrahlungskammer la, die im wesentlichen denselben Aufbau wie die Betrahlungskammer 1 der Fig.1 hat, jedoch mit Schlitzen (nicht eingezeichnet) zur Zu- und Abfuhr des Substrats 8a versehen sind. Darin wird die siliziumhaltige Substanz der UV-Strahlung des Xenon-Excimerstrahlers 6 ausgesetzt. Eine nachgeschaltete Trommel 11 wickelt das nunmehr mit einer Schutzschicht versehene Substrat 8a wieder auf.

Soll das Substrat vorgängig mit einer Schicht aus UV-härtenden Epoxisilicon versehen werden, und diese Schicht mit einem Excimerstrahler, z.B. einem Kryptonchloridstrahler (Lambda = 222 nm) oder einem Xenonchloridstrahler (Lambda = 308 nm) vernetzen werden, kann dies in einer zwischen Beschichtungseinrichtung 10 und Bestrahlungskammer 1a angeordneten Vernetzungskammer 12, in welcher ein zweiter UV-Excimerstrahler 6a angeordnet ist, erfolgen.

Beispiel 2 - Aluminiumoxid-Schichten

Zur Herstellung einer Aluminiumoxid-Beschichtung wird analog Beispiel 1 vorgegangen. Als Ausgangssubstanz wird das Substrat mit einer organischen Aluminiumverbindung, z.B. einem Aluminiumchelat, beschichtet. Die Verbindung Aluminium-diisopropoxid-acetoessigsäureester-chelat ($Al(OC_3H_7)_2C_6H_9O_3$) verdünnt mit Hexan oder Toluol ergibt gut benetzende zusammenhängende Filme, die nach Trocknung unter einer Infrarotlampe mit inkohärenter Excimerstrahlung der Wellenlänge 172 nm (Xenon-Excimere) oder 222 nm (Kryptonchlorid-Excimere) in Aluminiumoxidschichten umgewandelt werden. Unter UV-Bestrahlung werden die organischen Molekülgruppen photolytisch gespalten und in das stabilere Oxid umgewandelt. Der Nachweis dieses Umwandlungsprozesses konnte durch Verfolgen der UV-Transmission erbracht werden: Die zunächst sehr starke Absorption der Aluminiumchelate im Wellenlängenbereich 250 nm - 300 nm nimmt während der Bestrahlung ständig ab, bis sie die hohe UV-Transparenz dünner $Al_2O_3$-Schichten erreicht. Neben Aluminiumchelat kommen eine Reihe von organischen Aluminiumverbindungen in Betracht, z.B. $Al(NO_3)_3 \cdot 9H_2O$, $Al(OC_3H_7)_3$, $Al(OC_4H_9)_3$ oder auch $Al(OC_2H_5)_3$.

Beispiel 3 - Lanthanoxid-Schichten

Zur Herstellung einer Lanthanoxid-Beschichtung wird analog Beispiel 1 vorgegangen. Als Ausgangssubstanz wird das Substrat mit einer organischen Lanthanverbindung, z.B. die im Handel erhältliche Verbindung Lanthan-2,4-pentandionat ($La(C_5H_7O_2)_3$), die sich gut in Chloroform oder Ethanol löst, beschichtet. Mit einer Konzentration von ca. 1 mg Substanz pro 200 ml Lösungsmittel wurden dünne Filme auf das Substrat 8 aufgebracht, die sich nach 10- bis 30-minutiger UV-Bestrahlung in eine $La_2O_3$-Schicht von ca. 0,5 µm Dicke umwandeln. Die Umwandlung wurde wurde wie in Beispiel 2 durch die Veränderung der UV-Transmission nachgewiesen. Während der Lösungsmittelfilm eine starke Absorption im Wellenlängenbereich um 300 nm aufweist, ist die $La_2O_3$-Schicht oberhalb von 200 nm praktisch transparent. Da das Lanthanoxid noch stabiler ist als das Aluminiumoxid und ebenso wie dieses UV-transparent ist, zeichnen sich für derartige Schutzschichten, insbesondere für refraktäre Schichten, viele interessante Anwendungen ab.

Das erfindungsgemässe Verfahren ist nicht auf die Herstellung von Schutzschichten auf Si-, Al- oder La-Basis beschränkt. Nachstehend sind neben den drei bereits angesprochenen einige weitere Ausgangssubstanzen tabellarisch zusammmegefasst, die sich allesamt nach den beschriebenen Methoden photolytisch in Oxidschichten umwandeln lassen, wobei allenfalls die dabei verwendeten Lösungs- oder Verdünnungsmittel der jeweiligen Ausgangssubstanz angepasst werden müssen.

| Gewünschtes Oxid | Ausgangssubstanz |
|---|---|
| $SiO_2$, $SiO_x$ | Silizium-Colpolymere polymeris. Organofilamente zyklische Polysiloxane $Si(OCH_3)_4$, $Si(OC_2H_5)_4$ |
| $Al_2O_3$ | Aluminiumchelat $Al(NO_3)_3 \cdot 9H_2O$, $Al(OC_3H_7)_3$ $Al(OC_4H_9)_3$, $Al(OC_2H_5)_3$ |
| $TiO_2$ | $Ti(OC_2H_5)_4$, $Ti(OC_3H_7)_4$ $Ti(OC_4H_9)_4$ |
| $La_2O_3$ | $La(C_5H_7O_2)_3$ |
| $Y_2O_3$ | $Y(C_5H_7O_2)_3$ |
| $HfO_2$ | $Hf(C_5H_7O_2)_4$, $Hf(C_{11},H_{19}O_2)_4$ |
| $ZrO_2$ | $ZrOCl_2$, $Zr(C_3H_7O)_4$ |

**BEZEICHNUNGSLISTE**

1,1a      Bestrahlungskammern
2      Gaseinlass
3      Gasauslass
4, 5      Absperrorgane
6      Edelgas-Excimerstrahler

| 7 | Beschichtung |
|---|---|
| 8 | Substrat |
| 8a | bahnförmiges Substrat |
| 9 | Vorratstrommel |
| 10 | Beschichtungseinrichtung |
| 11 | Aufwickeltrommel |
| 12 | Vernetzungseinrichtung |
| P | Saugpumpe |

**Patentansprüche**

1. Verfahren zur Herstellung von Schutzschichten (7) auf einem Substrat (8) durch photooxidative Umwandlung einer auf dem Substrat aufgebrachten Ausgangssubstanz mit inkohärentem UV-Licht in einer sauerstoffhaltigen Atmosphäre unter photolytischer Abspaltung von Sauerstoffatomen aus Molekülen der Atmosphäre, dadurch gekennzeichnet, daß die Photooxidation der Ausgangssubstanz auf dem Substrat (8;8a) mit einer inkohärenten Strahlung eines Edelgas- oder Edelgas-Halogenid-Excimerstrahlers (6) mit einer Wellenlänge von 172 nm oder 222 nm durchgeführt wird und daß als Ausgangssubstanz

   - zur Herstellung von Aluminiumoxid-Schutzschichten eine organische Aluminiumverbindung,

   - zur Herstellung von Lanthanoxid-Schutzschichten eine organische Lanthanverbindung,

   - zur Herstellung von Titanoxid-Schutzschichten eine organische Titanverbindung,

   - zur Herstellung von Yttriumoxid-Schutzschichten eine organische Yttriumverbindung,

   - zur Herstellung von Hafniumoxid-Schutzschichten eine organische Hafniumverbindung,

   - zur Herstellung von Zirkonoxid-Schutzschichten $ZrOCl_2$ oder eine organische Zirkonverbindung,

   - zur Herstellung von Schutzschichten mit quarzähnlicher Oberflächenbeschaffenheit polymerisierte Organosilikone, zyklische Polysiloxane, Chloro-Methoxysiloxane, Tetramethylorthosilicat oder Tetraethylorthosilicat und

   - zur Herstellung von quarzähnlichen Schutzschichten eine UV-härtende siliziumhaltige Verbindung, vorzugsweise ein Epoxisilikon, verwendet wird, das vor der Photooxidation mittels einem UV-Strahler, vorzugsweise UV-Excimerstrahler, größerer Wellenlänge vernetzt wird.

2. Verfahren nach Anspruch 1, dadurch gekennzeichnet, daß das Substrat (8; 8a) vorgängig mittels Koronaentladungen oder UV-Bestrahlung aufgerauht und gereinigt wird, um die Haftfestigkeit der Beschichtung zu verbessern.

3. Verfahren nach Anspruch 1, dadurch gekennzeichnet, daß die Ausgangssubstanz in einem Lösungsmittel gelöst auf das Substrat (8; 8a) aufgebracht wird.

**Claims**

1. A method for the production of protective layers (7) on a substrate (8) by photooxidative conversion of a starting substance applied on the substrate with incoherent UV light in an atmosphere containing oxygen under photolytic separation of oxygen atoms from molecules of the atmosphere, characterised in that the photooxidation of the starting substance on the substrate (8;8a) is carried out with an incoherent radiation of a noble gas or noble gas/halide excimer radiator (6) with a wave length of 172 nm or 222 nm and that as starting substance

   - for the production of aluminium oxide protective layers, an organic aluminium compound,
   - for the production of lanthanum oxide protective layers, an organic lanthanum compound,
   - for the production of titanium oxide protective layers, an organic titanium compound,
   - for the production of yttrium oxide protective layers, an organic yttrium compound,

6

-   for the production of hafnium oxide protective layers, an organic hafnium compound,
-   for the production of zirconium oxide protective layers, ZrOCl$_2$ or an organic zirconium compound,
-   for the production of protective layers with a surface quality similar to quartz, polymerised organosilicones, cyclic polysiloxanes, chloro-methoxysiloxanes, tetramethylorthosilicate or tetraethylorthosilicate and
-   for the production of protective layers similar to quartz, a UV-hardening compound containing silicon, preferably an epoxy silicone, is used, which prior to photooxidation is cross-linked by means of a UV radiator, preferably a UV excimer radiator, of greater wave length.

2.  A method according to Claim 1, characterised in that the substrate (8;8a) is previously roughened by means of corona discharges or UV irradiation and cleaned, in order to improve the adhesive strength of the coating.

3.  A method according to Claim 1, characterised in that the starting substance is applied, dissolved in a solvent, onto the substrate (8;8a).

**Revendications**

1.  Procédé de fabrication de couches protectrices (7) sur un substrat (8) par conversion, par photo-oxydation, d'une substance initiale, appliquée sur le substrat, par de la lumière UV incohérente dans une atmosphère à teneur d'oxygène, avec obtention d'atomes d'oxygène par décomposition photolytique des molécules de l'atmosphère, caractérisé par le fait que l'on procède à la photo-oxydation de la substance initiale qui se trouve sur le substrat (8;8a) par une irradiation incohérente d'un émetteur d'irradiation (6) à excimères à gaz noble ou à halogénure d'un gaz noble d'une longueur d'onde de 172 nm ou 222 nm et que l'on utilise comme substance initiale

-   pour la fabrication de couches protectrices d'oxyde d'aluminium, une liaison organique de l'aluminium,
-   pour la fabrication de couches protectrices d'oxyde de lanthane, une liaison organique du lanthane,
-   pour la fabrication de couches protectrices d'oxyde de titane, une liaison organique du titane,
-   pour la fabrication de couches protectrices d'oxyde d'yttrium, une liaison organique de l'yttrium,
-   pour la fabrication de couches protectrices d'oxyde d'hafnium, une liaison organique de l'hafnium,
-   pour la fabrication de couches protectrices d'oxyde de zirconium, ZrOCl$_2$ ou une liaison organique du zirconium,
-   pour la fabrication de couches protectrices de qualité de surface analogue au quartz, on emploie des organosilicones polymérisées, des polysiloxanes cycliques, des chlorométhosiloxanes, du tétraméthylorthosilicate ou du tétraéthylorthosilicate et
-   pour la fabrication de couches protectrices semblables au quartz, on emploie une liaison à teneur de silicium durcissant aux UV, de préférence une époxysilicone, que, avant la photo-oxydation, on réticule au moyen d'un émetteur d'irradiation UV, de préférence un émetteur d'irradiation à excimères UV, d'assez grande longueur d'onde.

2.  Procédé selon la revendication 1, caractérisé par le fait que, préalablement, on rend le substrat (8;8a) rugueux et on le nettoie au moyen de décharges d'effet corona ou d'irradiation UV, pour améliorer les propriétés adhésives du revêtement.

3.  Procédé selon la revendication 1, caractérisé par le fait que l'on applique la substance initiale sur le substrat (8; 8a) dissoute dans un solvant.

FIG. 1

FIG. 2